# EUROPEAN PATENT APPLICATION

(11) **EP 4 581 935 A1**
(43) Date of publication of application: **09.07.2025**
(21) Application number: 23860464.9
(22) Date of filing: 31.08.2023
(51) Int. Cl.: A23D 9/00, A23D 9/02, A23G 1/36

(54) **RANDOM TRANSESTERIFIED OIL**

(30) Priority: 02.09.2022 JP 2022140176
(71) Applicant: Fuji Oil Holdings Inc., Izumisano-shi, Osaka 598-8540 (JP)
(72) Inventor: HASHIMOTO, Arata, Izumisano-shi, Osaka 598-8540 (JP); ASANO, Shigezo, Tsukubamirai-shi, Ibaraki 300-2436 (JP)
(74) Representative: Boult Wade Tennant LLP
(86) International application number: PCT/JP2023/031705
(87) International publication number: WO 2024/048702

(57) **Abstract**

An object is to provide an oil and/or fat with low trans fatty acid content. The oil and/or fat reduces graining in chocolate-based products. The oil and/or fat is a randomly interesterified oil in which in constituent fatty acid composition, a content of a saturated fatty acid having from 12 to 18 carbons is 20 mass% or more, and in the constituent fatty acid composition, when X denotes the content of the saturated fatty acid having from 12 to 18 carbons and Y denotes a content of a saturated fatty acid having from 12 to 14 carbons, Y/X is 0.2 or more and 1.0 or less.

## Description

### Technical Field

### Related Application

This application claims the benefit of priority from JP 2022-140176 filed on September 2, 2022. The priority application is incorporated herein by reference in its entirety.

The present invention relates to a randomly interesterified oil.

### Background Art

In addition to being used alone, chocolate-based products are also used in many foods in combination with confectionery or a baked good and are used in foods in a wide variety of forms. According to such forms for use, various functions are required for chocolate-based products.

Among various types of chocolate-based products, there are soft chocolate-based products with a smooth and soft texture. For such soft chocolate-based products, a liquid oil, such as soybean oil or rapeseed oil, and a slightly hydrogenated oil with a slip melting point of about 10°C to 20°C produced by hydrogenation of such a liquid oil as a raw material have been widely used in the art. The slightly hydrogenated oil has excellent compatibility with cocoa butter and also excellent crystal properties with good bloom resistance when blended into chocolate, having functions suitable for soft chocolate-based products. However, risks of trans fatty acids on health have been reported, and in such a circumstance, oils and/or fats with lowered trans fatty acid content in constituent fatty acid composition have come to be desired.

In a circumstance where oils and/or fats with low trans fatty acid content are desired, methods of blending a seed agent and/or an emulsifier into an existing low-melting-point oil and/or fat have been disclosed (Patent Literatures 1 and 2). However, these are not intended to improve an oil and/or fat but to improve crystal properties when an additive is added and blended into chocolate.

### Citation List

### Patent Literature

Patent Literature 1: JP 2021-153438 A
Patent Literature 2: WO 2019/194081
Patent Literature 3: JP 2018-171001 A
Patent Literature 4: JP 2018-171002 A

### Summary of Invention

### Technical Problem

Patent Literatures 3 and 4 disclose oils and/or fats with low trans fatty acid content, the oils and/or fats with improved crystal properties by interesterification. The disclosed oil and/or fat has a sharp melting profile in the mouth similar to that of cocoa butter, but the disclosed oil and/or fat alone has been a slightly hard oil and/or fat for use in soft chocolate-based products.

The present inventors have considered an issue occurring in soft chocolate-based products produced using an oil and/or fat with low trans fatty acid content. Blending an oil and/or fat with a melting point lower than that of cocoa butter may crystallize an oil and/or fat with a relatively high melting point, such as cocoa butter, and cause a phenomenon called graining, such as exhibiting a grainy granular oil and/or fat crystal and/or a crumbly texture with a rough tissue.

Based on recognition of such a related art, the object of the present invention is to provide an oil and/or fat with low trans fatty acid content, the oil and/or fat reducing graining in chocolate-based products.

### Solution to Problem

As a result of diligent studies to solve the above issue, the present inventors have found that the issue can be solved by a randomly interesterified oil in which in a constituent fatty acid composition, a content of a saturated fatty acid having from 12 to 18 carbons is 20 mass% or more, and in the constituent fatty acid composition, when X denotes the content of the saturated fatty acid having from 12 to 18 carbons and Y denotes a content of a saturated fatty acid having from 12 to 14 carbons, Y/X is 0.2 or more and 1.0 or less, and completed the present invention.

That is, the present invention includes the following contents.
(1) A randomly interesterified oil satisfying (A) and (B) described below:
   (A) in a constituent fatty acid composition, a content of a saturated fatty acid having from 12 to 18 carbons is 20 mass% or more; and
   (B) in the constituent fatty acid composition, when X denotes the content of the saturated fatty acid having from 12 to 18 carbons and Y denotes a content of a saturated fatty acid having from 12 to 14 carbons, Y/X is 0.2 or more and 1.0 or less.
(2) The randomly interesterified oil according to (1), in which
   (C) in the constituent fatty acid composition, a content of an unsaturated fatty acid is 50 mass% or more and 80 mass% or less.
(3) The randomly interesterified oil according to (1), in which
   (D) in the constituent fatty acid composition, the content of the saturated fatty acid having from 12 to 14 carbons is 5 mass% or more and 30 mass% or less.
(4) The randomly interesterified oil according to (2), in which
   (D) in the constituent fatty acid composition, the content of the saturated fatty acid having from 12 to 14 carbons is 5 mass% or more and 30 mass% or less.
(5) A chocolate-based product containing the randomly interesterified oil described in (1) or (2).
(6) A chocolate-based product containing the randomly interesterified oil described in (3) or (4).
(7) A chocolate-based product containing from 10 mass% to 70 mass% of an oil and/or fat content, in which the oil and/or fat content in the chocolate-based product contains from 3 mass% to 40 mass% of cocoa butter and from 5 mass% to 97 mass% of the randomly interesterified oil described in (1) or (2).
(8) A chocolate-based product containing from 10 mass% to 70 mass% of an oil and/or fat content, in which the oil and/or fat content in the chocolate-based product contains from 3 mass% to 40 mass% of cocoa butter and from 5 mass% to 97 mass% of the randomly interesterified oil described in (3) or (4).
(9) A method for preventing graining of a chocolate-based product, the method including using the randomly interesterified oil described in (1) or (2).
(10) A method for preventing graining of a chocolate-based product, the method including using the randomly interesterified oil described in (3) or (4).
(11) A method for producing a randomly interesterified oil, the method including blending raw material oils and/or fats in a manner that a randomly interesterified oil satisfying (A) and (B) described below is prepared:
   (A) in a constituent fatty acid composition, a content of a saturated fatty acid having from 12 to 18 carbons is 20 mass% or more; and
   (B) in the constituent fatty acid composition, when X denotes the content of the saturated fatty acid having from 12 to 18 carbons and Y denotes a content of a saturated fatty acid having from 12 to 14 carbons, Y/X is 0.2 or more and 1.0 or less.
(12) The method for producing a randomly interesterified oil according to (11), in which the raw material oils and/or fats for random interesterification contains an oil and/or fat raw material a and an oil and/or fat raw material b described below:
   oil and/or fat raw material a: a vegetable oil and/or fat with an iodine value of 50 to 150; and
   oil and/or fat raw material b: a lauric oil and/or fat.

### Advantageous Effects of Invention

According to the present invention, there can be provided an oil and/or fat preventing the occurrence of graining in chocolate-based products.

As a preferred aspect, there can be provided an oil and/or fat from which a soft chocolate-based product with good bloom resistance and a smooth texture can be obtained.

As a more preferred aspect, there can be provided an oil and/or fat better than a liquid oil that has been used in the art at preventing the occurrence of graining.

Using the randomly interesterified oil according to an embodiment of the present invention makes it possible to provide a chocolate-based product in which the occurrence of graining is prevented.

### Description of Embodiments

Hereinafter, the present invention will be described more in detail.

Examples of an oil and/or fat that can be used in a randomly interesterified oil according to an embodiment of the present invention include vegetable oils and/or fats, such as soybean oil, high-erucic rapeseed oil, rapeseed oil, corn oil, cottonseed oil, peanut oil, sunflower oil, high-oleic sunflower oil, rice oil, safflower oil, high-oleic safflower oil, olive oil, sesame oil, palm oil, coconut oil, palm kernel oil, a medium-chain fatty acid-conjugated oil and/or fat (MCT), shea butter, sal fat, and cocoa fat; animal oils and/or fats, such as milk fat, beef tallow, and lard; and their hydrogenated oils, fractionated oils, hydrogenated fractionated oils, fractionated hydrogenated oils, and processed oils and/or fats produced by subjecting to interesterification; as well as mixed oils of these.

A preferred aspect is directed to low-trans fatty acid in the present invention and thus can produce chocolate without using a partially hydrogenated oil containing a relatively large amount of trans fatty acid.

In the case of using high-erucic acid rapeseed oil, the content of erucic acid contained in the high-erucic acid rapeseed oil is preferably 30 mass% or more in the constituent fatty acid composition.

The randomly interesterified oil according to an embodiment of the present invention satisfies (A) and (B) described below:
(A) in a constituent fatty acid composition, a content of a saturated fatty acid having from 12 to 18 carbons is 20 mass% or more; and
(B) in the constituent fatty acid composition, when X denotes the content of the saturated fatty acid having from 12 to 18 carbons and Y denotes a content of a saturated fatty acid having from 12 to 14 carbons, Y/X is 0.2 or more and 1.0 or less.

In (A), in the constituent fatty acid composition, the content of the saturated fatty acid having from 12 to 18 carbons is 20 mass% or more, preferably 20 mass% or more and 50 mass% or less, more preferably 20 mass% or more and 45 mass% or less, and even more preferably 20 mass% or more and 40 mass% or less.

In (B), in the constituent fatty acid composition, when X denotes the content of the saturated fatty acid having from 12 to 18 carbons and Y denotes a content of a saturated fatty acid having from 12 to 14 carbons, Y/X is 0.2 or more and 1.0 or less, preferably 0.2 or more and 0.8 or less, and more preferably 0.2 or more and 0.7 or less.

As a preferred aspect, in the randomly interesterified oil according to an embodiment of the present invention, (C) in the constituent fatty acid composition, a content of an unsaturated fatty acid is 50 mass% or more and 80 mass% or less, preferably 52 mass% or more and 80 mass% or less, and more preferably 55 mass% or more and 80 mass% or less.

As a preferred aspect, in the randomly interesterified oil according to an embodiment of the present invention, (D) in the constituent fatty acid composition, the content of the saturated fatty acid having from 12 to 14 carbons is 5 mass% or more and 30 mass% or less, preferably 5 mass% or more and 27 mass% or less, more preferably 5 mass% or more and 25 mass% or less, and even more preferably 6 mass% or more and 23 mass% or less.

In the randomly interesterified oil according to an embodiment of the present invention, a trans fatty acid content in the constituent fatty acid composition is preferably 5 mass% or less, more preferably 3 mass% or less, even more preferably 2 mass% or less, and most preferably 1 mass% or less.

Examples of the random interesterification method include a method using an enzyme or a metal catalyst (e.g., sodium methylate).

For the randomly interesterified oil according to an embodiment of the present invention, an oil and/or fat to be used as a raw material oil and/or fat is not particularly limited as long as it satisfies the constitution described above, but a raw material oil and/or fat a and a raw material oil and/or fat b described below are preferably used as essential components:
oil and/or fat raw material a: a vegetable oil and/or fat with an iodine value of 50 to 150; and
oil and/or fat raw material b: a lauric oil and/or fat.

In the present specification, examples of the vegetable oil and/or fat with an iodine value of 50 to 150 to be used as the oil and/or fat raw material a include soybean oil, rapeseed oil, corn oil, cottonseed oil, peanut oil, sunflower oil, rice oil, safflower oil, olive oil, palm olein, and shea olein, and the vegetable oil and/or fat is preferably soybean oil, rapeseed oil, corn oil, cottonseed oil, sunflower oil, rice oil, or safflower oil that have an iodine value of 70 to 145.

In the present specification, the lauric oil and/or fat to be used as the oil and/or fat raw material b is an oil and/or fat containing a large amount of lauric acid, which is a saturated fatty acid having 12 carbons, and specific examples include coconut oil and palm kernel oil; and their hydrogenated oils, fractionated oils, hydrogenated fractionated oils, and fractionated hydrogenated oils; as well as mixed oils of these.

The randomly interesterified oil according to an embodiment of the present invention can be suitably used in chocolate-based products.

In the present specification, the chocolate-based product is not limited to chocolate, quasi chocolate, and chocolate-based food defined by the Japan National Chocolate Industry Fair Trade Council and the Japan Chocolate-Based Food Fair Trade Council but also includes oil and/or fat-processed food containing an oil and/or fat as an essential component and produced using cocoa mass, cocoa, cocoa butter, a cocoa butter alternative, hard butter, and/or the like and is produced through a common chocolate production process.

Chocolate-based products suitable for various applications can be produced by combining an oil and/or fat content derived from a cacao component and/or a milk component, a non-tempering hard butter, and an additional oil and/or fat component in addition to the randomly interesterified oil according to an embodiment of the present invention, and appropriately adjusting the blending amounts.

As a preferred aspect, the chocolate-based product produced using the randomly interesterified oil according to an embodiment of the present invention contains from 10 mass% to 70 mass% of an oil and/or fat content, and the oil and/or fat content in the chocolate-based product contains from 3 mass% to 40 mass% of cocoa butter and from 5 mass% to 97 mass% of the randomly interesterified oil.

In the present specification, the oil and/or fat content includes a fat content (cocoa butter) derived from a cocoa raw material, such as cocoa mass or cocoa powder, and also a fat content derived from a raw material to be blended in the chocolate-based product. The chocolate-based product contains more preferably from 20 mass% to 60 mass% of the oil and/or fat content. Adjusting the oil and/or fat content within an appropriate range enables a chocolate-based product to have good melt-in-the-mouth feeling and flavor.

The amount of the randomly interesterified oil according to an embodiment of the present invention to be used is more preferably from 8 mass% to 90 mass% and even more preferably from 10 mass% to 70 mass% in the oil and/or fat content in the chocolate-based product. Using less than 5 mass% of the randomly interesterified oil according to an embodiment of the present invention in the oil and/or fat content in the chocolate-based product may fail to achieve the effects of the present invention or the texture required for the chocolate-based product.

The content of cocoa butter in the chocolate-based product is more preferably from 5 mass% to 40 mass% in the oil and/or fat in the chocolate-based product. **In** the present specification, the content of cocoa butter includes fat content (cocoa butter) derived from a cocoa raw material, such as cocoa mass and/or cocoa powder.

As a preferred aspect, the chocolate-based product produced using the randomly interesterified oil according to an embodiment of the present invention is preferably a soft chocolate-based product. The soft chocolate-based product refers to a chocolate-based product that does not have good snap properties required for common chocolate-based products but has plasticity at ordinary temperature.

In the present specification, graining means a grainy granular oil and/or fat crystal and/or a crumbly texture with a rough tissue that occurs in stored chocolate-based products.

Blending an oil and/or fat having a melting point lower than that of cocoa butter with an oil and/or fat having a relatively high melting point, such as cocoa butter, causes the crystallization of the oil and/or fat having a relatively high melting point, and this is assumed to cause graining. Graining is largely affected by an oil and/or fat content contained in the chocolate-based product, and thus quality, such as graining in chocolate, can be evaluated by graining evaluation with an oil and/or fat.

The method for producing the chocolate-based product produced using the randomly interesterified oil according to an embodiment of the present invention can be carried out in the same manner as in producing a common chocolate-based product. Specifically, the chocolate-based product can be produced by using the randomly interesterified oil according to an embodiment of the present invention as an essential raw material, appropriately selecting raw materials, such as an additional oil and/or fat; a powder food of various types including sugar, cocoa mass, cocoa butter, cocoa powder, and milk powder; an emulsifier; a flavor; and a colorant, mixing these raw materials, and roll-refining and conching the mixture. In addition, for the production method, a method for producing a common chocolate-based product can be used, such as a production method of mixing and refining using a ball mill, a bead mill, or the like.

In the chocolate-based product produced using the randomly interesterified oil according to an embodiment of the present invention, an emulsifier commonly used in producing a chocolate-based product can be used. Examples include a polyglycerol fatty acid ester, a sucrose fatty acid ester, an organic acid monoglycerol fatty acid ester, polysorbate, and a polyglycerol condensed ricinoleic acid ester. These may be used in combination of two or more.

### Examples

Hereinafter, the present invention will be described in more detail by presenting examples of the present invention. In the examples, both % and parts are meant to be on a mass basis.

### Analysis Method

### Iodine Value

The iodine value of the oil and/or fat was measured in accordance with Standard Methods for the Analysis of Fats, Oils and Related Materials 2.3.4.1-2013.

### Fatty Acid Composition

The fatty acid composition was measured in accordance with the method specified in 2.4.1.2 Methyl Esterification Method (Boron Trifluoride-Methanol Method) in the JOCS Standard Methods for the Analysis of Fats, Oils and Related Materials (1996 Edition), published by Japan Oil Chemists' Society.

### Slip Melting Point

The slip melting point was measured in accordance with the method specified in 2.2.4.2 (Slip Melting Point) in the JOCS Standard Methods for the Analysis of Fats, Oils and Related Materials (1996 Edition), published by Japan Oil Chemists' Society.

### Study 1: Graining Evaluation with Chocolate

### A chocolate was produced according to the formulation in Table 1. (unit/parts by mass)

The chocolate was prepared according to a known method.

That is, appropriate amounts of an examined oil and/or fat and lecithin were added to cocoa powder, cocoa mass, lactose, and sugar. They were mixed with a mixer while being heated, and a dough was prepared.

This dough was refined to a particle size of about 20 µm with a roll refiner (three-roll mill SDY300 available from Buhler Inc.). All remaining amounts of the oil and/or fat and lecithin were added to this, the mixture was uniformly kneaded with a conching machine (conche), resulting in the formation of a chocolate. The particle size was measured using a micrometer.

The oil and/or fat (cocoa butter) content in the cocoa powder used was calculated as 11 mass%, and the oil and/or fat (cocoa butter) content in the cocoa mass was calculated as 55%. The oil and/or fat content in the chocolate was 40.2 mass%. Rapeseed oil was used as the examined oil and/or fat.

**[Table 1]**

| Raw material | Formulation (parts by mass) |
|---|---|
| Sugar | 40.4 |
| Examined oil and/or fat | 37.0 |
| Cocoa powder | 11.6 |
| Lactose | 7.5 |
| Cocoa mass | 3.5 |
| Lecithin | 0.4 |

### Evaluation Method for Graining of Chocolate

A melted chocolate was filled in a box with an inner bag and kept at 5°C, and the state of the chocolate was visually observed.

### Evaluation Result of Graining of Chocolate

In the chocolate produced using rapeseed oil, graining occurred in the entire chocolate including the inside and outside as early as on day 3.

### Study 2: Graining Evaluation with Oil and/or Fat

### Graining Evaluation Method with Oil and/or Fat

In the present study, only oils and/or fats in the chocolate were blended to evaluate the graining.

According to the chocolate formulation described in Table 1, a mixed oil was prepared to contain 92 parts by mass of an examined oil and/or fat and 8 parts by mass of cocoa butter. The mixed oil corresponds to only the oil and/or fat portion composed of the examined oil and/or fat and the cocoa butter content. As in the case of the chocolate formulation, rapeseed oil was used as the examined oil and/or fat.

The mixed oil was completely melted at 60°C or higher and dispensed into a petri dish. This petri dish was held at 60°C for 1 hour, at 30°C for 1 hour, and then at 5°C.

### Graining Evaluation Result with Oil and/or Fat

- As a result of visual observation of the state of the crystal after holding, graining occurred as early as on day 7 after storage.
- In the graining evaluation with the oil and/or fat assuming the oil and/or fat portion of chocolate, extending the graining resistance to four times (28 days) or more that of the evaluation result using rapeseed oil was set as the target quality of the oil and/or fat preventing the occurrence of graining.

### Study 3: Study 1 of Oil and/or Fat Preventing Occurrence of Graining

In the present study, only oils and/or fats in the chocolate were blended to evaluate the graining to study the oil and/or fat preventing the occurrence of graining.

Raw material oils and/or fats were blended according to the description in Table 2. The blended raw material oils and/or fats were stirred and mixed, then 0.20 mass% of sodium methylate was added as a catalyst to the stirred and mixed raw material oils and/or fats, random interesterification was carried out on the mixture at 80°C for 30 minutes, and then water washing, decolorizing, and deodorizing were performed according to a common procedure, resulting in the formation of randomly interesterified oils 1 to 14.

The following oils and fats were used as an oil and/or fat H and an oil and/or fat I, and the iodine value is indicated as IV in the table.

### Oil and/or Fat H and Oil and/or Fat I

After mixing 30.0 parts by mass of a high-oleic acid sunflower oil with an oleic acid content of 86.0% in a constituent fatty acid composition and 70.0 parts by mass of stearic acid, interesterification was carried out on the mixture using a lipase with 1,3-position selectivity, resulting in the formation of a reaction oil.

The fatty acid was removed by distillation from this reaction oil, and the resultant was subjected to two stage solvent fractionation using acetone. The resulting middle-melting-point fraction was decolorized and deodorized according to a common procedure, resulting in the formation of the oil and/or fat H (iodine value: 33.0). In addition, the resulting low-melting-point fraction was decolorized and deodorized according to a common procedure, resulting in the formation of the oil and/or fat I (iodine value: 65.0).

The randomly interesterified oils 1 to 14 were analyzed for fatty acid composition according to the fatty acid composition analysis method described above. The results are shown in Table 3.

The fatty acid compositions of the oils and/or fats A and B are also described.

In the table, calculated values are described, where X denotes the content (%) of a saturated fatty acid having from 12 to 18 carbons in a constituent fatty acid composition, and Y denotes the content (%) of a saturated fatty acid having from 12 to 14 carbons in a constituent fatty acid composition. Furthermore, Z denotes the total amount of an unsaturated fatty acid. For oils and/or fats A and B, the following were used.
Oil and/or fat A: rapeseed oil
Oil and/or fat B: palm super olein (iodine value 67)

**[Table 2]**

| | Randomly interesterified oil raw material formulation | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| Refined corn oil (IV = 120) | 70.0 | 67.5 | 65.0 | 60.0 | 50.0 | 40.0 | | | | | | | | |
| Safflower oil (IV = 143) | | | | | | | 90.0 | 87.5 | 85.0 | 80.0 | 75.0 | 70.0 | | |
| Rapeseed oil (IV = 117) | | | | | | | | | | | | | 75.0 | 80.0 |
| Refined coconut oil (IV = 9) | | 2.5 | 5.0 | 10.0 | 20.0 | 30.0 | 10.0 | 10.0 | 10.0 | 10.0 | 10.0 | 10.0 | 10.0 | 10.0 |
| Oil and/or fat I | 30.0 | 30.0 | 30.0 | 30.0 | 30.0 | 30.0 | | | | | | | | |
| Oil and/or fat H | | | | | | | | | | | 15.0 | | | |
| Palm fully hydrogenated oil (IV < 1) | | | | | | | | 2.5 | 5.0 | 10.0 | | | 15.0 | 10.0 |
| Refined palm oil (IV = 52) | | | | | | | | | | | | 20.0 | | |

**[Table 3]**

| | Oil and/or fat | | Randomly interesterified oil | | | | | | | | | | | | | |
|---|---|---|---|---|---|---|---|---|---|---|---|---|---|---|---|---|
| Examined oil and/or fat | A | B | 1 | 2 | 3 | 4 | 5 | 6 | 7 | 8 | 9 | 10 | 11 | 12 | 13 | 14 |
| C8 | 0.0 | 0.0 | 0.0 | 0.2 | 0.3 | 0.7 | 1.4 | 2.1 | 0.6 | 0.6 | 0.6 | 0.6 | 0.6 | 0.6 | 0.6 | 0.6 |
| C10 | 0.0 | 0.0 | 0.0 | 0.1 | 0.3 | 0.6 | 1.1 | 1.7 | 0.5 | 0.5 | 0.5 | 0.5 | 0.5 | 0.5 | 0.5 | 0.5 |
| C12 | 0.0 | 0.0 | 0.0 | 1.2 | 2.4 | 4.9 | 9.8 | 14.6 | 4.8 | 4.8 | 4.8 | 4.8 | 4.8 | 4.8 | 4.8 | 4.8 |
| C14 | 0.0 | 1.0 | 0.0 | 0.5 | 1.0 | 1.9 | 3.8 | 5.7 | 1.9 | 2.0 | 2.0 | 2.0 | 1.9 | 2.1 | 2.1 | 2.0 |
| C16 | 4.3 | 31.9 | 9.2 | 9.1 | 9.0 | 8.5 | 8.8 | 8.5 | 6.6 | 7.5 | 8.5 | 10.4 | 6.3 | 14.3 | 10.9 | 8.9 |
| C18 | 1.8 | 2.8 | 10.2 | 10.4 | 10.4 | 12.3 | 10.4 | 10.5 | 2.6 | 3.9 | 5.2 | 7.7 | 11.1 | 3.0 | 9.8 | 7.2 |
| C18:1 | 65.3 | 50.7 | 40.5 | 38.7 | 38.1 | 39.8 | 35.3 | 32.7 | 12.1 | 11.8 | 11.5 | 10.9 | 15.4 | 17.5 | 49.8 | 53.0 |
| C18:2 | 19.6 | 12.8 | 38.7 | 38.0 | 36.7 | 30.4 | 28.5 | 23.4 | 70.3 | 68.3 | 66.4 | 62.5 | 58.8 | 56.5 | 14.8 | 15.8 |
| C18:3 | 8.7 | 0.6 | 1.0 | 0.9 | 0.9 | 0.8 | 0.7 | 0.6 | 0.3 | 0.3 | 0.3 | 0.3 | 0.3 | 0.3 | 6.5 | 7.0 |
| C20 | 0.0 | 0.2 | 0.3 | 0.9 | 0.8 | 0.2 | 0.2 | 0.2 | 0.3 | 0.3 | 0.3 | 0.3 | 0.2 | 0.2 | 0.0 | 0.0 |
| C22 | 0.3 | 0.0 | 0.0 | 0.1 | 0.1 | 0.0 | 0.0 | 0.0 | 0.0 | 0.0 | 0.0 | 0.0 | 0.0 | 0.0 | 0.2 | 0.2 |
| Total | 100 | 100 | 100 | 100 | 100 | 100 | 100 | 100 | 100 | 100 | 100 | 100 | 100 | 100 | 100 | 100 |
| Y | 0.0 | 1.0 | 0.0 | 1.7 | 3.3 | 6.8 | 13.5 | 20.3 | 6.7 | 6.7 | 6.7 | 6.8 | 6.7 | 6.9 | 6.8 | 6.8 |
| X | 6.1 | 35.7 | 19.4 | 21.1 | 22.8 | 27.5 | 32.7 | 39.3 | 15.9 | 18.2 | 20.4 | 24.9 | 24.1 | 24.2 | 27.5 | 22.9 |
| Y/X | 0.0 | 0.0 | 0.0 | 0.1 | 0.1 | 0.2 | 0.4 | 0.5 | 0.4 | 0.4 | 0.3 | 0.3 | 0.3 | 0.3 | 0.2 | 0.3 |
| Z | 93.5 | 64.1 | 80.3 | 77.7 | 75.7 | 71.0 | 64.6 | 56.7 | 82.7 | 80.4 | 78.2 | 73.7 | 74.5 | 74.4 | 71.1 | 75.8 |

The prepared randomly interesterified oils 1 to 14 were used to prepare mixed oils containing 92 parts by mass of an examined oil and/or fat and 8 parts by mass of cocoa butter. The resulting mixed oils were evaluated at 5°C by "Graining Evaluation Criteria for Oil and/or Fat" described below according to the "Graining Evaluation Method with Oil and/or fat" described above. The evaluation results are described in Table 4. The analytical values (X, Y, Y/X, Z) of the randomly interesterified oils used were also evaluated.
For the cocoa butter, the following was used.
Cocoa butter (Cocoa Butter 201, available from Fuji Oil Co., Ltd.)

### Graining Evaluation Criteria for Oil and/or Fat

∘: good
Δ: a small amount of graining occurred, within an acceptable range
×: graining occurred entirely
o and Δ were determined to be acceptable.

**[Table 4]**

| | Examples | | | | | | | | | Comparative Examples | | | | | | |
|---|---|---|---|---|---|---|---|---|---|---|---|---|---|---|---|---|
| | 1 | 2 | 3 | 4 | 5 | 6 | 7 | 8 | 9 | 1 | 2 | 3 | 4 | 5 | 6 | 7 |
| Examined oil and/or fat used | 4 | 5 | 6 | 9 | 10 | 11 | 12 | 13 | 14 | A | B | 1 | 2 | 3 | 7 | 8 |
| Day 7 | ○ | ○ | ○ | ○ | ○ | ○ | ○ | ○ | ○ | × | △ | △ | △ | △ | × | × |
| Day 14 | ○ | ○ | ○ | ○ | ○ | ○ | ○ | ○ | ○ | × | × | × | × | × | × | × |
| Day 28 | ○ | ○ | ○ | ○ | ○ | ○ | ○ | ○ | ○ | × | × | × | × | × | × | × |
| Y | 6.8 | 13.5 | 20.3 | 6.7 | 6.8 | 6.7 | 6.9 | 6.8 | 6.8 | 0.0 | 1.0 | 0.0 | 1.7 | 3.3 | 6.7 | 6.7 |
| X | 27.5 | 32.7 | 39.3 | 20.4 | 24.9 | 24.1 | 24.2 | 27.5 | 22.9 | 6.1 | 35.7 | 19.4 | 21.1 | 22.8 | 15.9 | 18.2 |
| Y/X | 0.2 | 0.4 | 0.5 | 0.3 | 0.3 | 0.3 | 0.3 | 0.2 | 0.3 | 0.0 | 0.0 | 0.0 | 0.1 | 0.1 | 0.4 | 0.4 |
| Z | 71.0 | 64.6 | 56.7 | 78.2 | 73.7 | 74.5 | 74.4 | 71.1 | 75.8 | 93.5 | 64.1 | 80.3 | 77.7 | 75.7 | 82.7 | 80.4 |

### Discussion on Table 4

In examples using the randomly interesterified oils 4 to 6 or 9 to 14, graining did not occur even on day 28, achieving the target quality.

### Evaluations of Fatty Acid Composition Analytical Values

The compositions of the randomly interesterified oils and/or fats were evaluated by the following numerical values.
X, denoting a content of a saturated fatty acid having from 12 to 18 carbons in a constituent fatty acid composition: 20 mass% or more
Y, denoting a content of a saturated fatty acid having from 12 to 14 carbons in a constituent fatty acid composition: 5 mass% or more and 30 mass% or less
Y/X: 0.2 or more and 1.0 or less
Z, denoting a content of an unsaturated fatty acid in a constituent fatty acid composition: 50 mass% or more and 80 mass% or less

### Evaluation Results of Fatty Acid Composition Analytical Values

- The randomly interesterified oils 4 to 6 and 9 to 14, which were well evaluated for graining, satisfy both the numerical ranges of X and Y/X.
- The randomly interesterified oils 4 to 6 and 9 to 14 also satisfy the numerical range of Z in addition to the numerical ranges of X and Y/X.
- The randomly interesterified oils 4 to 6 and 9 to 14 also satisfy the numerical range of Y in addition to the numerical ranges of X and Y/X.

### Discussion on Oil and/or Fat Raw Materials Used

The randomly interesterified oils 4 to 6 and 9 to 14, for which evaluation results were good, contained the following oil and/or fat raw material a and oil and/or fat raw material b in the raw material oils and/or fats in addition to the constitution described above.
Oil and/or fat raw material a: a vegetable oil and/or fat with an iodine value of 50 to 150
Oil and/or fat raw material b: a lauric oil and/or fat

### Study 4: Study 2 of Oil and/or Fat Preventing Occurrence of Graining

The prepared randomly interesterified oils were used to prepare mixed oils containing 91.3 parts by mass of an examined oil and/or fat, 8 parts by mass of cocoa butter, and 0.7 parts by mass of high-erucic acid rapeseed fully hydrogenated oil. The resulting mixed oils were evaluated at 5°C according to the "Graining Evaluation Method with Oil and/or fat" and "Graining Evaluation Criteria for Oil and/or Fat" described above. The evaluation results are described in Table 5.

**[Table 5]**

| | Examples | | | | | | | | | Comparative Examples | | | |
|---|---|---|---|---|---|---|---|---|---|---|---|---|---|
| | 10 | 11 | 12 | 13 | 14 | 15 | 16 | 17 | 18 | 8 | 9 | 10 | 11 |
| Examined oil and/or fat used | 4 | 5 | 6 | 9 | 10 | 11 | 12 | 13 | 14 | A | B | 7 | 8 |
| Day 7 | ○ | ○ | △ | ○ | ○ | ○ | ○ | ○ | ○ | × | ○ | × | △ |
| Day 14 | ○ | ○ | △ | ○ | ○ | ○ | ○ | ○ | ○ | × | ○ | × | × |
| Day 28 | ○ | ○ | △ | ○ | ○ | ○ | ○ | ○ | ○ | × | × | × | × |

### Discussion on Table 5

For the randomly interesterified oils according to an embodiment of the present invention, graining did not occur even on day 28 in the evaluation for those in which the high erucic acid rapeseed fully hydrogenated oil was blended, achieving the target quality.

### Study 5: Graining Evaluation with Chocolate

Graining was evaluated with chocolates produced using a randomly interesterified oil according to an embodiment of the present invention.

Chocolates were produced using the randomly interesterified oil 13 or 14 in the same manner as described above according to the formulation described in Table 1 and were evaluated in the same manner as in the "Evaluation Method for Graining of Chocolate" described above. Graining was evaluated according to "Graining Evaluation Criteria for Chocolate" described below. The evaluation results are shown in Table 6.

A chocolate was also produced using the oil and/or fat A as a comparative example in the same manner and evaluated. In the formulation thereof, the oil and/or fat content in the chocolate-based product contained 8 mass% of cocoa butter and 92 mass% of the examined oil and/or fat.

### Graining Evaluation Criteria for Chocolate

∘: good
Δ: a small amount of graining occurred, within an acceptable range
×: graining occurred entirely
o and Δ were determined to be acceptable.

**[Table 6]**

| | Examples | | Comparative Example |
|---|---|---|---|
| | 19 | 20 | 12 |
| Examined oil and/or fat used | 13 | 14 | A |
| Day 3 | ○ | ○ | × |
| Day 7 | ○ | ○ | × |
| Day 14 | ○ | ○ | × |
| Day 28 | ○ | ○ | × |

### Graining Evaluation Results with Chocolate

The chocolates produced using the randomly interesterified oil according to an embodiment of the present invention exhibited graining resistance better than that of the comparative example, similarly to the evaluation with the oils and/or fats.

### Industrial Applicability

Using the randomly interesterified oil according to an embodiment of the present invention makes it possible to provide the oil and/or fat preventing the occurrence of graining in chocolate-based products.

## Claims

1. A randomly interesterified oil satisfying (A) and (B) described below:
(A) in a constituent fatty acid composition, a content of a saturated fatty acid having from 12 to 18 carbons is 20 mass% or more; and
(B) in the constituent fatty acid composition, when X denotes the content of the saturated fatty acid having from 12 to 18 carbons and Y denotes a content of a saturated fatty acid having from 12 to 14 carbons, Y/X is 0.2 or more and 1.0 or less.

2. The randomly interesterified oil according to claim 1, wherein
(C) in the constituent fatty acid composition, a content of an unsaturated fatty acid is 50 mass% or more and 80 mass% or less.

3. The randomly interesterified oil according to claim 1, wherein
(D) in the constituent fatty acid composition, the content of the saturated fatty acid having from 12 to 14 carbons is 5 mass% or more and 30 mass% or less.

4. The randomly interesterified oil according to claim 2, wherein
(D) in the constituent fatty acid composition, the content of the saturated fatty acid having from 12 to 14 carbons is 5 mass% or more and 30 mass% or less.

5. A chocolate-based product comprising the randomly interesterified oil described in claim 1 or 2.

6. A chocolate-based product comprising the randomly interesterified oil described in claim 3 or 4.

7. A chocolate-based product comprising from 10 mass% to 70 mass% of an oil and/or fat content, wherein the oil and/or fat content in the chocolate-based product contains from 3 mass% to 40 mass% of cocoa butter and from 5 mass% to 97 mass% of the randomly interesterified oil described in claim 1 or 2.

8. A chocolate-based product comprising from 10 mass% to 70 mass% of an oil and/or fat content, wherein the oil and/or fat content in the chocolate-based product contains from 3 mass% to 40 mass% of cocoa butter and from 5 mass% to 97 mass% of the randomly interesterified oil described in claim 3 or 4.

9. A method for preventing graining of a chocolate-based product, the method comprising using the randomly interesterified oil described in claim 1 or 2.

10. A method for preventing graining of a chocolate-based product, the method comprising using the randomly interesterified oil described in claim 3 or 4.

11. A method for producing a randomly interesterified oil, the method comprising blending raw material oils and/or fats in a manner that a randomly interesterified oil satisfying (A) and (B) described below is prepared:
(A) in a constituent fatty acid composition, a content of a saturated fatty acid having from 12 to 18 carbons is 20 mass% or more; and
(B) in the constituent fatty acid composition, when X denotes the content of the saturated fatty acid having from 12 to 18 carbons and Y denotes a content of a saturated fatty acid having from 12 to 14 carbons, Y/X is 0.2 or more and 1.0 or less.

12. The method for producing a randomly interesterified oil according to claim 11, wherein the raw material oils and/or fats for random interesterification comprises an oil and/or fat raw material a and an oil and/or fat raw material b described below:
oil and/or fat raw material a: a vegetable oil and/or fat with an iodine value of 50 to 150; and
oil and/or fat raw material b: a lauric oil and/or fat.
